(19) **Europäisches Patentamt**
**European Patent Office**
**Office européen des brevets**

(11) **EP 2 509 305 A1**

(12) **EUROPEAN PATENT APPLICATION**
published in accordance with Art. 153(4) EPC

(43) Date of publication:
**10.10.2012 Bulletin 2012/41**

(51) Int Cl.:
***H04N 5/76*** *(2006.01)*

(21) Application number: **10843711.2**

(22) Date of filing: **20.07.2010**

(86) International application number:
**PCT/CN2010/075300**

(87) International publication number:
**WO 2011/088671 (28.07.2011 Gazette 2011/30)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **20.01.2010 CN 201010002406**

(71) Applicant: **ZTE Corporation Shenzhen, Guangdong 518057 (CN)**

(72) Inventors:
• **GUO, Yuefei Shenzhen Guangdong 518057 (CN)**

• **YANG, Xi Shenzhen Guangdong 518057 (CN)**
• **BAO, Xuejun Shenzhen Guangdong 518057 (CN)**

(74) Representative: **Jansen, Cornelis Marinus VEREENIGDE Johan de Wittlaan 7 2517 JR Den Haag (NL)**

(54) **METHOD AND APPARATUS FOR TRANSCRIBING MULTIMEDIA BROADCASTING PROGRAM**

(57) A method for transcribing a multimedia broadcasting program is provided by the disclosure. The method comprises the following steps: during playing of the multimedia broadcasting program, when a transcribing command is received, program contents cached in a preset caching area is transferred into a storage device of a mobile terminal, wherein the program contents cached in the caching area have been played when the transcribing command is received (101); and subsequent program contents that continue to be played in the multimedia broadcasting program are transcribed into the storage device. And an apparatus for transcribing a multimedia broadcasting program is further provided by the disclosure. The problem in the prior art may be solved by applying the disclosure, and the problem is that, during a transcription process, a user does not make transcription operation until he/she has enjoyed a segment of the program, and the multimedia program contents finally generated will be incomplete.

Fig. 1

101
When a transcribing command is received, program contents cached in a set caching area are transferred into a storage device of a mobile terminal, wherein the program contents cached in the caching area have been played when the transcribing command is received

102
Subsequent program contents that continue to be played in a multimedia broadcasting program are transcribed into the storage device

EP 2 509 305 A1

**Description**

**TECHNICAL FIELD**

The disclosure relates to the field of multimedia technologies, particularly to a method and an apparatus for transcribing a multimedia broadcasting program.

**BACKGROUND**

With the continuous development of electronic technologies, personally consumed electronic devices keep being improved. At present, more and more multimedia functions, such as: a multimedia broadcasting function, are integrated on personally consumed electronic devices like mobile terminals.

A mobile multimedia broadcasting technology represented by a mobile TV develops rapidly in the recent years. At present, a mobile multimedia broadcasting system used on a mobile terminal mainly shows two technical directions. The first is a stream media technology based on a cellular mobile communication network. Particularly, 3G and its evolved technologies raise Internet access rate of cellular mobile terminals and greatly improve user experience. Among them, the typical technologies, such as: a Media FLO (Forward link only) technology, may realize a mobile multimedia broadcasting system based on the 3G network. Another direction is a direct broadcasting reception mode based on a broadcasting network. It has many technical standards, such as: DVB-H (Digital Video Broadcasting-Handing), DMB (Digital Media Broadcasting) originated from DAB (Digital Audio Broadcast) — European digital audio standard, CMMB (China Mobile Multimedia Broadcasting) — Chinese DTV terrestrial industry standards. The technical difference of these standards mainly lies in a system-side network structure, channel structure and other protocol layers, while their system architectures all adopt a broadcasting mode.

Due to the limitation of standby time of mobile terminals, users of mobile multimedia broadcasting service will not be in a standby mode online for a long time. In order that a mobile terminal not in the standby mode can still receive and play mobile multimedia broadcasting service, the prior art introduces a function for transcribing a mobile multimedia broadcasting program. The user transcribes his/her favored programs and stores them in a memory of his/her mobile terminal. After a mobile multimedia system receiver is shut off, he/she may still enjoy transcribed programs on the mobile terminal without linking cellular network data service or the broadcasting network, thereby saving power consumption of the terminal and cost of the user, and improving user experience.

The prior art mainly adopts a timely transcription method to transcribe mobile multimedia broadcasting programs, but the method has certain defects:

When a timely transcription method is adopted, transcription of the program is determined after a user has enjoyed a segment of the program although he/she does not need to acquire information of the broadcasting program in the course of transcription. As a result, the multimedia program contents finally generated are incomplete.

**SUMMARY**

An embodiment of the disclosure provides a method for transcribing a multimedia broadcasting program, to solve the problem of the prior art that during a transcription process, a user does not decide transcription operation until he/she has enjoyed a segment of the program, resulting in incomplete multimedia program contents finally generated from the transcription. The method comprises:

during playing of the multimedia broadcasting program, when a transcribing command is received, transferring program contents cached in a set caching area into a storage device of a mobile terminal, wherein the program contents cached in the caching area have been played when the transcribing command is received; and

transcribing subsequent program contents that continue to be played in the multimedia broadcasting program into the storage device.

An embodiment of the disclosure also provides an apparatus for transcribing a multimedia broadcasting program, to solve the problem of the prior art that during a transcription process, a user does not decide transcription operation until he/she has enjoyed a segment of the program, resulting in incomplete multimedia program contents finally generated from the transcription. The apparatus comprises:

a receiving module, configured to receive a transcribing command during playing of the multimedia broadcasting program;

a transferring module, configured to transfer program contents cached in a set caching area into a storage device of a mobile terminal, when the receiving module receives the transcribing command, wherein the program contents cached in the caching area have been played when the transcribing command is received; and

a transcribing module, configured to transcribe subsequent program contents that continue to be played in the multimedia broadcasting program into the storage device.

In the embodiment of the disclosure, the program contents that have been played are cached in the preset caching area, and when a transcribing command is received, the program contents cached in the preset caching area are transferred into the storage device of the mobile terminal. That is to say, when a transcribing command is received, part or all of the program contents that have been played when receiving the transcribing command may still be stored in the storage device of the mobile terminal. Compared with the timely transcription method in the prior art, it may realize relative completeness of the transcription of the multimedia broadcasting program and improve user experience in multimedia broadcasting service.

**BRIEF DESCRIPTION OF THE DRAWINGS**

Fig. 1 is a concrete flow diagram of a method for transcribing a multimedia broadcasting program provided by an embodiment of the disclosure;

Fig. 2 is a flow diagram of a concrete example of a method for transcribing a multimedia broadcasting program provided by an embodiment of the disclosure;

Fig. 3 is the first structural schematic of an apparatus for transcribing a multimedia broadcasting program provided by an embodiment of the disclosure;

Fig. 4 is the second structural schematic of an apparatus for transcribing a multimedia broadcasting program provided by an embodiment of the disclosure;

Fig. 5 is a structural schematic of a transferring module provided by an embodiment of the disclosure;

Fig. 6 is the third structural schematic of an apparatus for transcribing a multimedia broadcasting program provided by an embodiment of the disclosure; and

Fig. 7 is the fourth structural schematic of an apparatus for transcribing a multimedia broadcasting program provided by an embodiment of the disclosure.

**DETAILED DESCRIPTION**

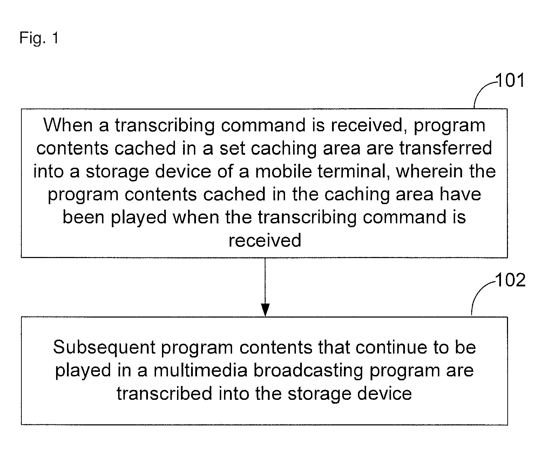

In order to solve the problem of the prior art that during a transcription process, a user does not decide transcription operation until he/she has enjoyed a segment of the program, resulting in incomplete multimedia program contents finally generated from the transcription, an embodiment of the disclosure provides a method for transcribing a multimedia broadcasting program which is applies to a mobile terminal. In the process, when the mobile terminal initiates a multimedia broadcasting service and plays a multimedia broadcasting program, the played multimedia broadcasting program is transcribed into a storage device of the mobile terminal. The concrete processing flow is shown in Fig. 1 and comprises the following steps.
Step S101: when a transcribing command is received, program contents cached in a set caching area are transferred into a storage device of a mobile terminal, wherein the program contents cached in the caching area have been played when the transcribing command is received.
Step S102: subsequent program contents that continue to be played in a multimedia broadcasting program are transcribed into the storage device.
In the flow as shown in Fig. 1, when step S101 is implemented, the caching area is set in the mobile terminal, which is configured to synchronously store the program contents that have been played during playing of the multimedia broadcasting program.
During implementation, in order to ensure smooth cache, the setting of attributes of the caching area shall meet the following conditions: setting a caching space of the caching area to be no greater than a present remaining storage space of the mobile terminal; and/or, setting a caching time of the caching area to be no greater than a preset caching time, wherein the preset caching time is a ratio of the present remaining storage space of the mobile terminal to a maximum space occupancy rate of the multimedia broadcasting program, i.e.: caching time<=(present remaining storage space/the maximum space occupancy rate of the multimedia broadcasting program).

Conventionally, the unit of the caching space is byte, the unit of the caching time is second (s), and the unit of the maximum space occupancy rate of the multimedia broadcasting program is byte/s.

As for the setting of the caching area, a user may be promoted to manually set a caching area when the user activates a mobile multimedia broadcasting service integrated by the mobile terminal in the first time, or when the mobile terminal is powered on in the first time after it leaves a factory. After the setting is completed, the setting will come into effect when the mobile multimedia broadcasting service is activated next time. Alternatively, relevant attributes of the caching area may be preset in the mobile terminal before it leaves a factory, or be set prior to activation of the multimedia broadcasting service each time during implementation based on content of the multimedia broadcasting program to be played each time.

When the program contents are cached in the preset caching area, there may be a plurality of caching modes. For example, a preferred caching mode is full caching area stack caching. In this method, the whole caching area is considered as an integral storage space and the program contents are stored in this storage space in order. When the program contents are greater than the caching space, the previously stored program contents will overflow in order of time, while part of the program contents that are greater than the caching space will be cached. For example, if the caching space is 30M and the currently played multimedia broadcasting program is 35M, then content from 0M to 5M will overflow, while content from 30M to 35M will be cached. Another preferred caching mode is block-based stack caching, i.e.: the caching area is divided into a plurality of cache blocks. The method to cache program contents in each cache block is similar to the method to cache program contents in the whole caching area. When the program contents are greater than the caching space, priority is given to eliminate content in the first cache block in order of time, program contents are cached in the first cache block, followed by the second cache block, the third cache block......the Nth cache block......the first cache block, wherein N is a natural number. The process is circulated. During implementation, there may be other caching modes, which may be determined according to the actual situation.

During implementation, the storage device in steps S101 and S102 may be a built-in memory of the mobile terminal, or a plug-in auxiliary memory, such as: a mobile hard disk drive, a universal serial BUS flash disk, or a compact disk.

From step S101, it may be learnt that during implementation, the program contents that have been played may be cached in the preset caching area, and when the transcribing command is received, the program contents cached in the caching area are transferred into the storage device of the mobile terminal. That is to say, when the transcribing command is received, part or all of the program contents that have been played when receiving the transcribing command may still be stored in the storage device of the mobile terminal. Compared with the timely transcription method in the prior art, it may realize relative completeness of the transcription of the multimedia broadcasting program and improve user experience in the multimedia broadcasting service.

In the flow as shown in Fig. 1, when step S102 is implemented, the subsequent program contents that continue to be played are transcribed into the storage device. For the moment, the caching area may continue to cache the played multimedia broadcasting program, and of course, may choose not caching it subject to an actual situation. When transcribing the whole multimedia broadcasting program, the file of the program contents transferred into the storage device and the file of the subsequently transcribed program contents are combined into a single file. In other words, the two files are merged into one file, to facilitate user's enjoyment and improve user experience.

During implementation, when the mobile terminal terminates the multimedia broadcasting service, it will release the storage space of the preset caching area to save the occupied system resources. Certainly, prior to the termination of the multimedia broadcasting service, transcription is not limited to one multimedia broadcasting program and a plurality of multimedia broadcasting programs may be transcribed in order, provided that the storage space of the storage device of the mobile terminal is not exceeded.

The method for transcribing a multimedia broadcasting program provided by an embodiment of the disclosure is applicable to present broadcasting methods, such as: a stream media method based on a cellular mobile communication network, and a direct broadcasting reception method based on a broadcasting network.

Further, compared with the fixed-time transcription frequently applied at present, the method for transcribing a multimedia broadcasting program provided by an embodiment of the disclosure does not need to acquire information about program broadcasting parameters before the transcription. The operation is simple and less complex and improves user experience.

Now a concrete example is given. In the example, the storage device of the mobile terminal is a 2GBT-flash card, the program contents are cached in a manner of the block-based dynamic caching, the caching time set by the user is 60s, the format of the multimedia broadcasting program transcribed by the mobile terminal is a video coding format of 3G stream media common to mobile terminals, the video code rate is 224kbps, the image standard is common standard image format QCIF (Quarter common intermediate format), such as: 176*144, an audio code rate is 32k, a total audio and video code rate is 256Kbps, and the size of the caching space is calculated with the following formula:

$$\text{Caching space (MB)} = (\text{Total audio and video code rate (Kbps)}/8) \times \text{Caching time(s)}/1024.$$

By taking the foregoing parameters for example, the caching space may be calculated to be 1.875MB. Supposing the files stored in the 2GBT-flash card are empty, it may be judged that 60s of cache setting condition is effective to this mobile terminal.

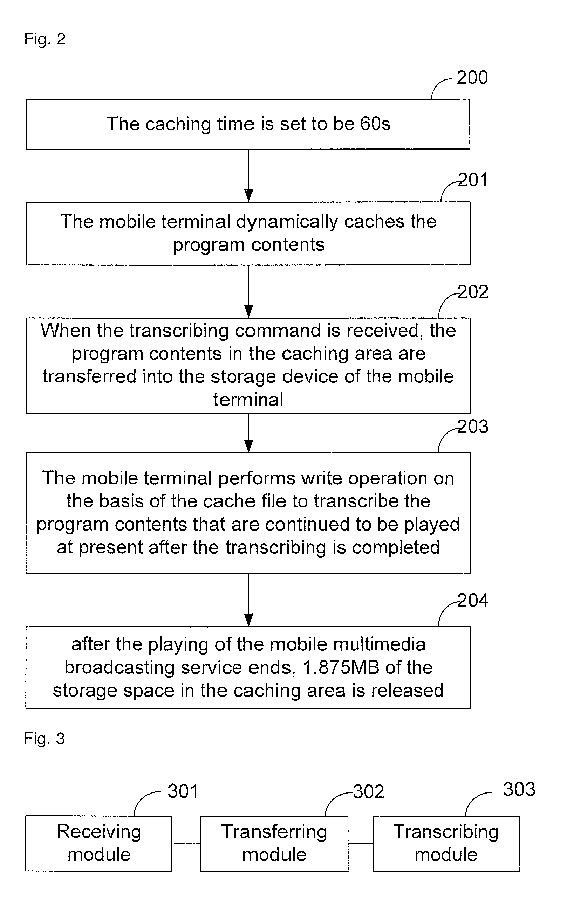

If the number of the blocks in the caching area is set to be five, then each storage unit is 0.375MB (3Mbit), equivalent to a storage time of approximately 12s. After the mobile multimedia broadcasting program is started, the processing flow of the mobile terminal is as shown in Fig. 2.

Step S200: the caching time set by the user is 60s.

Step S201: the mobile terminal dynamically caches the program contents.

Step S202: when the transcribing command is received, the program contents in the caching area are transferred into the storage device of the mobile terminal.

Step S203: the mobile terminal performs write operation on the basis of the cache file to transcribe the program contents that are continued to be played at present after the transcribing is completed.

Step S204: after the playing of the mobile multimedia broadcasting service ends, 1.875MB of the storage space in the caching area is released.

During implementation of step S201, the size of each cache block is set to be 3Mbit. After the cache data occupy the whole space of 1.875MB, the 3Mbit program contents cached in the first cache block are eliminated, and the caching is continued. Subsequently, the program contents cached in the first, second, fourth and fifth cache blocks are replaced with new program contents one after another, and then the process is circulated.

Based on one same inventive concept, an embodiment of the disclosure also provides an apparatus for transcribing a multimedia broadcasting program, as shown in Fig. 3, which comprises:

a receiving module 301, configured to receive a transcribing command during playing of the multimedia broadcasting program;

a transferring module 302, configured to transfer program contents cached in a set caching area into a storage device of a mobile terminal, when the receiving module 301 receives the transcribing command, wherein the program contents cached in the caching area have been played when the transcribing command is received; and

a transcribing module 303, configured to transcribe subsequent program contents that continue to be played in the multimedia broadcasting program into the storage device.

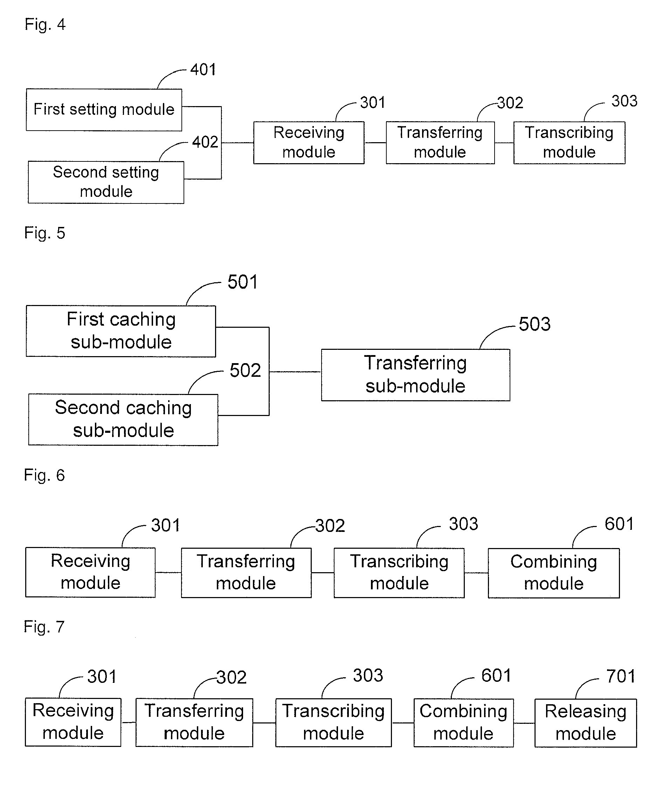

In an embodiment, with a structure as shown in Fig. 4, the apparatus for transcribing a multimedia broadcasting program may also comprise:

a first setting module 401, configured to set a caching space of the caching area to be no greater than a present remaining storage space; and

a second setting module 402, configured to set a caching time of the caching area to be no greater than a preset caching time, wherein the preset caching time is a ratio of the present remaining storage space of the mobile terminal to a maximum space occupancy rate of the multimedia broadcasting program.

In an embodiment, with a structure as shown in Fig. 5, the transferring module 302 may comprises:

a first caching sub-module 501, configured to cache the program contents of the multimedia broadcasting program in a full caching area stack caching manner during the playing of the multimedia broadcasting program;

a second caching sub-module 502, configured to cache the program contents of the multimedia broadcasting program in a block-based stack caching manner during the playing of the multimedia broadcasting program; and

a transferring sub-module 503, configured to transfer the program contents cached in the first caching sub-module 501 or the second caching sub-module 502 into the storage device.

In an embodiment, with a structure as shown in Fig. 6, the apparatus for transcribing a multimedia broadcasting program may also comprise:

a combining module 601, configured to combine the program contents transferred into the storage device and the subsequently transcribed program contents into a single file after the transcribing is completed.

In an embodiment, with a structure as shown in Fig. 7, the apparatus for transcribing a multimedia broadcasting program may also comprise:

a releasing module 701, configured to release the storage space of the caching area after the playing of the multimedia broadcasting program ends.

In an embodiment, with a structure as shown in Fig. 3, the apparatus for transcribing a multimedia broadcasting program is integrated into a mobile terminal.

In the embodiment of the disclosure, the program contents that have been played are cached in the preset caching area, and the program contents stored in the caching area are transferred into the storage device of the mobile terminal when a transcribing command is received. That is to say, when a transcribing command is received, part or all of the program contents that have been played when receiving the transcribing command may still be stored in the storage device of the mobile terminal. Compared with the timely transcription method in the prior art, it may realize relative completeness of the transcription of the multimedia broadcasting program and improve user experience in multimedia broadcasting service.

Further, when transcribing the whole multimedia broadcasting program, the file of the program contents transferred into the storage device and the file of the subsequently transcribed program contents are combined into a single file, to facilitate user's enjoyment and improve user experience.

Further, compared with the fixed-time transcription frequently applied at present, the method for transcribing a multimedia broadcasting program provided by the embodiment of the disclosure does not need to acquire detailed information about program broadcasting parameters like program starting time and end time before the transcription. The operation is simple and less complex and improves user experience.

Apparently, those skilled in the art may make changes and modifications to the disclosure without departing from the spirit and scope of the disclosure. If these changes and modifications to the disclosure fall within the scope of the claims of the disclosure and identical art, then the disclosure also intends to cover these changes and modifications.

**Claims**

1. A method for transcribing a multimedia broadcasting program, comprising:

during playing of the multimedia broadcasting program, when a transcribing command is received, transferring program contents cached in a set caching area into a storage device of a mobile terminal, wherein the program contents cached in the caching area have been played when the transcribing command is received; and transcribing subsequent program contents that continue to be played in the multimedia broadcasting program into the storage device.

2. The method according to claim 1, wherein the step of setting the caching area comprises:

setting a caching space of the caching area to be no greater than a present remaining storage space of the mobile terminal; and/or, setting a caching time of the caching area to be no greater than a preset caching time; wherein the present caching time is a ratio of the present remaining storage space of the mobile terminal to a maximum space occupancy rate of the multimedia broadcasting program.

3. The method according to claim 1, wherein the program contents are cached in the caching area in a manner of full caching area stack caching and/or block-based stack caching.

4. The method according to claim 1, wherein the storage device comprises a built-in memory of the mobile terminal, and/or a plug-in auxiliary memory.

5. The method according to claim 1, further comprising:

combining the program contents transferred into the storage device and the subsequently transcribed program contents into a single file after the transcribing is completed.

6. The method according to any one of claim 1 to claim 5, further comprising:

    releasing the caching space of the caching area after the playing of the multimedia broadcasting program ends.

7. An apparatus for transcribing a multimedia broadcasting program, comprising:

    a receiving module, configured to receive a transcribing command during playing of the multimedia broadcasting program;
    a transferring module, configured to transfer program contents cached in a set caching area into a storage device of a mobile terminal, when the receiving module receives the transcribing command, wherein the program contents cached in the caching area have been played when the transcribing command is received; and
    a transcribing module, configured to transcribe subsequent program contents that continue to be played in the multimedia broadcasting program into the storage device.

8. The apparatus according to claim 7, further comprising: a first setting module, and/or a second setting module;
    wherein the first setting module is configured to set a caching space of the caching area to be no greater than a present remaining storage space; and
    wherein the second setting module is configured to set a caching time of the caching area to be no greater than a preset caching time, wherein the preset caching time is a ratio of the present remaining storage space of the mobile terminal to a maximum space occupancy rate of the multimedia broadcasting program.

9. The apparatus according to claim 7, wherein the transferring module further comprises: a first caching sub-module, a second caching sub-module and a transferring sub-module; wherein,
    the first caching sub-module is configured to cache the program contents of the multimedia broadcasting program in a full caching area stack caching manner during the playing of the multimedia broadcasting program;
    the second caching sub-module is configured to cache the program contents of the multimedia broadcasting program in a block-based stack caching manner during the playing of the multimedia broadcasting program; and
    the transferring sub-module is configured to transfer the program contents cached in the first caching sub-module or the second caching sub-module into the storage device when the receiving module receives the transcribing command.

10. The apparatus according to claim 7, further comprising: a combining module, configured to combine the program contents transferred into the storage device and the subsequently transcribed program contents into a single file after the transcribing is completed.

11. The apparatus according to any one of claim 7 to claim 10, further comprising:

    a releasing module, configured to release the storage space of the caching area after the playing of the multimedia broadcasting program ends.

12. The apparatus according to claim 7, wherein the apparatus is integrated into the mobile terminal.

Fig. 1

101

When a transcribing command is received, program contents cached in a set caching area are transferred into a storage device of a mobile terminal, wherein the program contents cached in the caching area have been played when the transcribing command is received

102

Subsequent program contents that continue to be played in a multimedia broadcasting program are transcribed into the storage device

Fig. 2

/200

| The caching time is set to be 60s |

/201

| The mobile terminal dynamically caches the program contents |

/202

| When the transcribing command is received, the program contents in the caching area are transferred into the storage device of the mobile terminal |

/203

| The mobile terminal performs write operation on the basis of the cache file to transcribe the program contents that are continued to be played at present after the transcribing is completed |

/204

| after the playing of the mobile multimedia broadcasting service ends, 1.875MB of the storage space in the caching area is released |

Fig. 3

| /301 | | /302 | | /303 |
| Receiving module | | Transferring module | | Transcribing module |

Fig. 4

First setting module —401

Second setting module —402

Receiving module —301

Transferring module —302

Transcribing module —303

Fig. 5

First caching sub-module —501

Second caching sub-module —502

Transferring sub-module —503

Fig. 6

Receiving module —301

Transferring module —302

Transcribing module —303

Combining module —601

Fig. 7

Receiving module —301

Transferring module —302

Transcribing module —303

Combining module —601

Releasing module —701

# INTERNATIONAL SEARCH REPORT

| International application No. |
| --- |
| PCT/CN2010/075300 |

**A.  CLASSIFICATION OF SUBJECT MATTER**

H04N 5/76 (2006.01) i

According to International Patent Classification (IPC) or to both national classification and IPC

**B.   FIELDS SEARCHED**

Minimum documentation searched (classification system followed by classification symbols)

IPC: H04N5/-, H04N7/-, H04M1/-, H04H

Documentation searched other than minimum documentation to the extent that such documents are included in the fields searched

Electronic data base consulted during the international search (name of data base and, where practicable, search terms used)

WPI,EPODOC,CNKI,CNPAT: DMB, cell phone, mobile phone, mobile terminal, record?, recording, program, stream, video, digital multimedia broadcasting, recording, record?, transcription, transfer, transferring, buffer, cache

**C.   DOCUMENTS CONSIDERED TO BE RELEVANT**

| Category* | Citation of document, with indication, where appropriate, of the relevant passages | Relevant to claim No. |
| --- | --- | --- |
| PX | CN101778273A (ZTE CORPORATION) 14 Jul. 2010 (14.07.2010)     claims 1-12 | 1-12 |
| A | CN101409593A (ZTE CORPORATION) 15 Apr. 2009 (15.04.2009) the whole document | 1-12 |
| A | CN1909631A (LG ELECTRONICS KUNSHAN COMPUTER CO., LTD.)<br><br>07 Feb. 2007 (07.02.2007)    the whole document | 1-12 |
| A | CN101518065A (SHARP KABUSHIKI KSIAHA) 26 Aug. 2009 (26.08.2009)<br><br>the whole document | 1-12 |

☒ Further documents are listed in the continuation of Box C.          ☒ See patent family annex.

| | |
| --- | --- |
| *       Special categories of cited documents:<br>"A"   document defining the general state of the art which is not considered to be of particular relevance<br>"E"   earlier application or patent but published on or after the international filing date<br>"L"   document which may throw doubts on priority claim (S) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"document member of the same patent family |
| Date of the actual completion of the international search<br>30 Sep. 2010 (30.09.2010) | Date of mailing of the international search report<br>**28 Oct. 2010 (28.10.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>WU, Xinghua<br><br>Telephone No. (86-10)62413467 |

Form PCT/ISA /210 (second sheet) (July 2009)

# INTERNATIONAL SEARCH REPORT

International application No.

PCT/CN2010/075300

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-86434A (NIPPON TELEVISION NETWORK CORPORATION) 31 Mar. 2005 (31.03.2005) the whole document | 1-12 |
| A | JP 2005-323279A (SANYO ELECTRIC CO., LTD.) 17 Nov.2005 (17.11.2005) the whole document | 1-12 |
| A | CN101098470A (TENCENT SCI & TECHNOLOGY SHENZHEN CO., LTD.) 02 Jan. 2008 (02.01.2008) the whole document | 1-12 |
| A | CN101505418A (ZTE CORPORATION) 12 Aug. 2009 (12.08.2009) the whole document | 1-12 |
| A | CN101600092A (ZTE CORPORATION) 09 Dec. 2009 (09.12.2009) the whole document | 1-12 |
| A | CN101511007A (H3C TECHNOLOGIES CO., LTD.) 19 Aug. 2009 (19.08.2009) the whole document | 1-12 |
| A | CN101035214A (LG ELECTRONICS SHENYANG CO., LTD.) 12 Sep. 2007 (12.09.2007) the whole document | 1-12 |

Form PCT/ISA /210 (continuation of second sheet ) (July 2009)

## INTERNATIONAL SEARCH REPORT
### Information on patent family members

International application No.

PCT/CN2010/075300

| Patent Documents referred in the Report | Publication Date | Patent Family | Publication Date |
|---|---|---|---|
| CN101778273A | 14.07.2010 | None | |
| CN101409593A | 15.04.2009 | None | |
| CN1909631A | 07.02.2007 | None | |
| CN101518065A | 26.08.2009 | WO 2008047647 A1 | 24.04.2008 |
| | | EP 2073538 A1 | 24.06.2009 |
| | | US 2010166385 A1 | 01.07.2010 |
| JP 2005-86434A | 31.03.2005 | None | |
| JP 2005-323279A | 17.11.2005 | None | |
| CN101098470A | 02.01.2008 | None | |
| CN101505418A | 12.08.2009 | None | |
| CN101600092A | 09.12.2009 | None | |
| CN101511007A | 19.08.2009 | None | |
| CN101035214A | 12.09.2007 | None | |

Form PCT/ISA /210 (patent family annex) (July 2009)